(19) Europäisches Patentamt
European Patent Office
Office européen des brevets

(11) Publication number : **0 368 427 B1**

(12) **EUROPEAN PATENT SPECIFICATION**

(45) Date of publication of patent specification :
02.09.92 Bulletin 92/36

(51) Int. Cl.⁵ : **A01K 1/015**

(21) Application number : **89202854.9**

(22) Date of filing : **10.11.89**

(54) **Metal grid floor and elements from which the grid floor is formed.**

(30) Priority : **11.11.88 NL 8802781**

(43) Date of publication of application :
**16.05.90 Bulletin 90/20**

(45) Publication of the grant of the patent :
**02.09.92 Bulletin 92/36**

(84) Designated Contracting States :
**AT BE CH DE ES FR GB GR IT LI LU NL SE**

(56) References cited :
**EP-A- 0 118 139**
**EP-A- 0 161 717**
**EP-A- 0 259 910**
**DE-A- 3 107 976**

(56) References cited :
**FR-A- 2 198 516**
**NL-A- 7 906 922**
**NL-A- 8 005 277**
**US-A- 3 809 014**

(73) Proprietor : **Nooyen, Antonius Maria Aloysius**
**Kanveldweg 5**
**NL-5754 PM Deurne (NL)**

(72) Inventor : **Nooyen, Antonius Maria Aloysius**
**Kanveldweg 5**
**NL-5754 PM Deurne (NL)**

(74) Representative : **Van kan, Johan Joseph**
**Hubert, Ir. et al**
**Algemeen Octrooibureau P.O. Box 645**
**Boschdijk 155**
**NL-5600 AP Eindhoven (NL)**

## Description

The invention relates to a metal grid floor of which the temperature can be controlled, said grid floor comprising bars spaced from each other by a short distance, said bars being interconnected by several cross connections which are spaced from each other by a relatively large distance. The invention furthermore relates to an element from which such a grid floor is formed, said element consisting of bars and cross connections or cross girders.

Similar metal grid floors for stalls are especially known from the European patents 118,139 and 259 910 which describe a heatable metal floor for e.g. a pig house, said floor comprising a closed, heatable part, which closed, heatable part is at its bottom side provided with tubes for passing through a heatable fluid, whilst the grid is not heatable. Such a heatable floor is successfully applied in rearing pens for piglets, whereby the young piglets huddle together on the heatable plate.

A further development of this kind of floors is known from the US patent 4,628,662, in which the bars are provided with a profile, so that the animals do not slip so easily and find some support on the floor when rising from a lying position. Also these floors with an anti-slip profile are preferably provided with a heatable plate.

From further research it became apparent that with piglets growing up the risk of the heatable plate being fouled became greater, which fouling does not occur with young piglets because they do not foul their own bedding. With piglets growing up the risk of fouling of the plate is also greater because the plate is larger in that case, and therefore a grid has been developed such as is described in the Dutch patent application 8602158, wherein the heatable plate is spherical in shape and is provided, at at least two sides, with a grid part, so that the droppings do not remain behind on the heatable plate.

It has now become apparent that weaned piglets do have a need for a heatable grid, but said grid does not have to be provided with a heatable, closed plate surface.

Such a metal grid floor, whose temperature can be controlled, as mentioned in the preamble, is therefore characterized in that the cross connections consist of tubes through which a fluid regulating the temperature can be passed. Preferably a hose is passed through the tubes, through which hose the fluid regulating the temperature can be passed. At a temperature below 25°C, which is prevalent in The Netherlands, it will be preferred to pass a heated fluid, such as hot water, through the tubes or hoses, so that the temperature within close proximity of the cross connections will be about 35 - 40° C, and the temperature in the house will be about 25° C. In warmer countries or at times when the temperature in the houses is getting too high in the Netherlands it will be preferred to pass a cooling fluid through the tubes or the hoses. Such a heatable grid is easy to clean and inexpensive to produce.

From the Dutch patent application 7906922 there is known per se a grid for forming a floor in cubicles for sows and piglets, said grid being heatable by heating it electrically or by heating it by means of a heating circuit. The grid disclosed in said Dutch patent application is a rigid structure, however, slots or holes being provided in a plate and one or two tubes being provided under the grid, in the longitudinal direction of the grid, which can heat the grid. Said grid has not been used in practice, however, since it is difficult to maintain because it becomes fouled and because the plates present problems when the animals walk on them. It is surprising, therefore, that precisely with the desired grid floors the cross connections can be used for heating the grid floor.

The invention will be further explained with reference to the following description, whereby reference is made to the appended drawing, in which:

Fig 1 is a plan view of a grid element according to the invention; and

Fig 2 is a side elevational view of such an element.

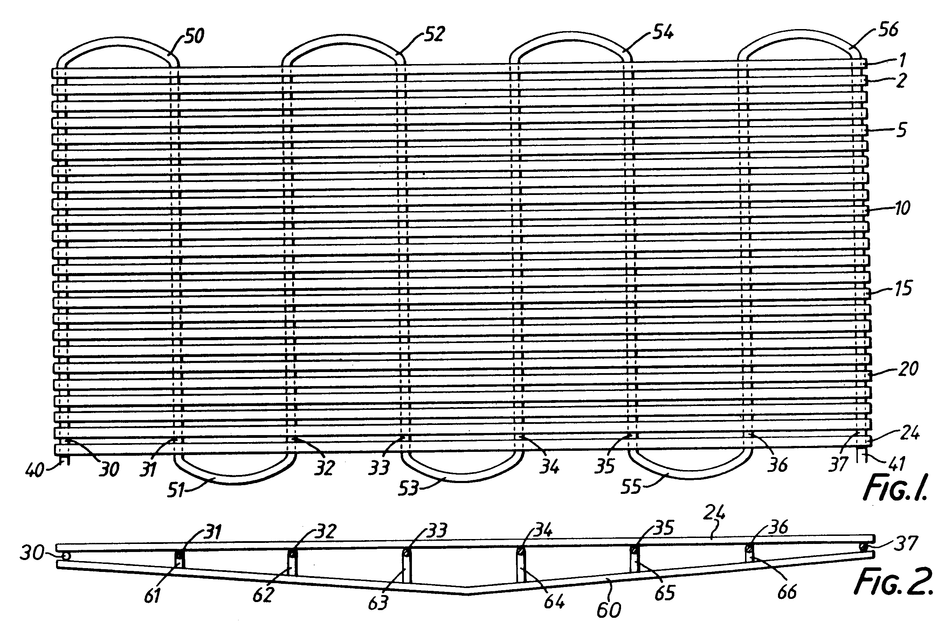

Fig 1 shows a plan view of an element of a metal grid floor according to the invention, said element consisting of the bars 1 - 24 extending in longitudinal direction, said bars being made of galvanized steel and preferably having a triangular, rounded section. The bars 124 are supported by cross girders, said cross girders in the grid floors and elements according to the invention consisting of tubes 30 - 37, which tubes 30 - 37 are interconnected at their alternating ends by means of connecting pieces 50 - 56. Said connecting pieces 50 - 56 may be fixed connections, so that the tubes 30 - 37 are continuously connected. Preferably, however, a hose is passed through the tubes 30 - 37, which are seamless tubes having a diameter of 2 - 2.5 cm, said hose having a diameter which is about 0.5 mm smaller than the diameter of the tubes 30 - 37, so that the connecting pieces 50 - 56 represent the hose parts exiting from the tubes. The diameters of the tubes and the hoses have been chosen such that the hoses can be provided in the tubes with the best possible fit, in order to obtain a maximum contact between the outer surface of the hose and the inner surface of the tube, so that a good transfer of heat is obtained. The fluid can be supplied at the inlet 40 and discharged at the outlet 41.

Fig 2 shows a side elevational view of the grid element illustrated in Fig 1, whereby reference numeral 24 represents the bar in the longitudinal direction of the grid, reference numerals 30-37 indicate the ends of the tubes for supporting the bars 1 - 24, and reference numeral 60 indicates a structural bar reinforcing the structure, said bar being connected to the horizontal bar 24 by means of the connecting pieces 61 - 66.

It will be apparent that Fig 1, for the purpose of illustration, shows an element whereby the tubes 30 - 37 are interconnected via the connecting pieces or bars 50 - 56. In a grid floor in a pighouse the elements, such as illustrated in Fig 1, will be provided with connecting pieces 50, 52, 54 and 56 at their ends only, whilst the tubes 31 - 36 are connected to the tubes of the next element, so that the connecting pieces 51, 53 and 55 can be provided near the ends of the grid floor built up of elements such as shown in Fig 1, without the connecting pieces 51, 53 and 55.

The element as it is shown in Fig 1 may furthermore be provided with an anti-slip profile, such as is described in the above-mentioned US patent 4,628, 662.

With the grid floor according to the invention it is possible to heat or cool the grid more or less locally, e.g by passing the fluid through the tubes 35, 36 and 37 only, whilst the remaining part of the grid is kept at ambient temperature. In this way it can be achieved that the piglets stay at one side of their pen and, besides, the temperature of the house can be adjusted. The principal control of the temperature for the house will take place by means of the ventilating air, although an adjustment of the temperature by a few degrees Celcius will be possible by heating the whole of the grid or portions of it.

## Claims

1.  Metal grid floor of which the temperature can be controlled, said grid floor comprising bars spaced from each other by a short distance, said bars being interconnected by several cross connections which are spaced from each other by a relatively large distance, characterized in that the cross connections consist of tubes through which a fluid regulating the temperature can be passed.

2.  Metal grid floor according to claim 1, characterized in that a hose is passed through the tubes, through which hose the fluid can be passed.

3.  Element for use in forming the grid floor according to claim 1, said element consisting of bars and cross connections, characterized in that the cross connections consist of tubes through which a hose can be passed, or through which a fluid can be passed.

4.  Metal grid floor and/or element according to claims 1 - 3, characterized in that the tube is seamless and has a diameter of 2 - 2.5 cm.

5.  Metal grid floor and/or element according to claims 1 - 4, characterized in that the bars are provided with an anti-slip profile.

## Patentansprüche

1.  Metallgitterboden, dessen Temperatur steuerbar ist, welcher Gitterboden Stäbe in geringem Abstand voneinander aufweist, die durch mehrere Querverbindungen mit relativ großem Abstand voneinander zusammengeschlossen sind, dadurch **gekennzeichnet**, daß die Querverbindungen aus Rohren bestehen, durch die ein die Temperatur regelndes Fluid geschickt werden kann.

2.  Metallgitterboden nach Anspruch 1, dadurch **gekennzeichnet**, daß ein Schlauch durch die Rohre gezogen ist, durch welchen Schlauch das Fluid geschickt werden kann.

3.  Element zur Verwendung beim Aufbau des Gitterbodens nach Anspruch 1, welches Element aus Stäben und Querverbindungen besteht, dadurch **gekennzeichnet**, daß die Querverbindungen aus Rohren bestehen, durch die ein Schlauch gezogen oder durch ,die ein Fluid geschickt werden kann.

4.  Metallgitterboden und/oder Element nach den Ansprüchen 1 bis 3, dadurch **gekennzeichnet**, daß das Rohr nahtlos ist und einen Durchmesser von 2 bis 2,5 cm aufweist.

5.  Metallgitterboden und/oder Element nach den Ansprüchen 1 bis 4, dadurch **gekennzeichnet**, daß die Stäbe mit einem Antirutschprofil versehen sind.

## Revendications

1.  Plancher en forme de grille métallique dont la température peut être commandée, ledit plancher en forme de grille comprenant des barres séparées par une courte distance, lesdites barres étant interconnectées par plusieurs liaisons transversales qui sont séparées les unes des autres par une distance relativement importante, caractérisé en ce que les liaisons transversales sont constituées par des tubes dans lesquels peut circuler un fluide réglant la température.

2.  Plancher en forme de grille métallique selon la revendication 1, caractérisé en ce qu'un tuyau, dans lequel le fluide peut circuler, est enfilé dans les tubes.

3.  Élément destiné à être utilisé pour former le plancher en forme de grille selon la revendication 1, ledit élément étant constitué de barres et de liaisons transversales, caractérisé en ce que les liaisons transversales sont constituées par des tubes dans lesquels on peut enfiler un tuyau ou dans lesquels on peut faire passer un fluide.

4.  Plancher en forme de grille métallique et/ou élément selon les revendications 1-3, caractérisé en ce que le tube est sans soudure et possède un diamètre de 2-2,5 cm.

5.  Plancher en forme de grille métallique et/ou élément selon les revendications 1-4, caractérisé en ce que les barres sont réalisées avec un profil antiglissant.

FIG.1.

FIG.2.

EP 0 368 427 B1